# FASCICULE DE BREVET EUROPEEN

(11) **EP 2 561 022 B1**
(45) Date de publication et mention de la délivrance du brevet: **12.03.2014**
(21) Numéro de dépôt: 11731024.3
(22) Date de dépôt: 21.04.2011
(51) Int. Cl.: C09D 161/06, C08L 61/00, C08J 5/24, C08L 61/06, C03C 25/34, B24D 3/34, B24D 7/00

(54) **STRUCTURE DE FILS DE VERRE DESTINEE A RENFORCER DES ARTICLES ABRASIFS AGGLOMERES.**
GLASFASERSTRANGSTRUKTUR FÜR VERSTÄRKUNG VON GEBONDETEN SCHLEIFARTIKELN
GLASS STRAND STRUCTURE DESIGNED TO REINFORCE BONDED ABRASIVE ARTICLES

(30) Priorité: 21.04.2010 FR 1053039
(43) Date de publication de la demande: 27.02.2013
(73) Titulaire: Saint-Gobain Adfors, 73000 Chambéry (FR)
(72) Inventeur: OMBE WANDJI, Nadège, F-94700 Maisons Alfort (FR); ARNAUD, Alix, F-92120 Montrouge (FR); ESPIARD, Philippe, F-60270 Gouvieux (FR); CHUDA, Katarzyna, F-75016 Paris (FR)
(74) Mandataire: Jamet, Vincent
(86) Numéro de dépôt international: PCT/FR2011/050921
(87) Numéro de publication internationale: WO 2011/131913

(56) Documents cités:
- FR-A1- 2 917 403
- FR-A1- 2 921 666
- GB-A- 1 151 174

## Description

La présente invention se rapporte au domaine des abrasifs. Elle concerne plus précisément une structure à base de fils de verre revêtue d'une composition résinique destinée à renforcer des articles abrasifs agglomérés, en particulier des meules, la composition résinique utilisée pour revêtir cette structure et les articles abrasifs agglomérés incorporant une telle structure.

Les articles abrasifs renferment une multitude de particules abrasives solidement liées entre elles par un liant. Ces articles sont largement employés pour l'usinage de pièces en matériaux divers, notamment dans les opérations de découpe, d'ébavurage, de rectification et de polissage.

De manière classique, on distingue :
- les articles abrasifs appliqués (« coated abrasives ») qui comprennent un support flexible à la surface duquel sont réparties des particules abrasives enchâssées dans un liant. Le support flexible peut être une feuille de papier ou un réseau de fibres, par exemple un mat, un feutre ou un tissu. Ces articles peuvent adopter des formes variées : feuilles, disques, courroies, cônes, ...
- les articles abrasifs agglomérés (« bonded abrasives ») qui sont obtenus à partir d'un mélange de particules abrasives et de liant, mis en forme et rendu compact par moulage sous pression. Il s'agit pour l'essentiel de meules abrasives.

Les articles abrasifs agglomérés auxquels se rapporte plus particulièrement l'invention sont des meules abrasives utilisées pour découper des matériaux durs, notamment de l'acier. Ces meules sont mises en oeuvre sur des machines fonctionnant à une vitesse périphérique élevée, et de ce fait elles doivent pouvoir résister aux fortes contraintes mécaniques engendrées par celle-ci.

En particulier, il est important que les exigences suivantes soient satisfaites :
- les particules abrasives doivent être adaptées à la nature du matériau à traiter : elles doivent être suffisamment solides pour ne pas s'effriter au contact dudit matériau, et conserver des arêtes acérées pour pouvoir le couper,
- le liant doit présenter une bonne résistance à la rupture en traction afin que les particules abrasives restent liées à lui et ne soient pas arrachées sous l'effet de la force centrifuge. En outre, le liant doit pouvoir résister aux températures élevées qui résultent des frottements importants avec le matériau à traiter ; le liant ne doit ni fluer ni être dégradé sous l'effet de la chaleur,
- la meule abrasive ne doit pas s'user prématurément ni éclater ; elle doit garder ses caractéristiques dimensionnelles initiales le plus longtemps possible pour que la découpe s'effectue dans de bonnes conditions.

Il est usuel de consolider la meule abrasive en y incorporant au moins une structure à base de fils de renforcement, tels que des fils de verre, qui peut se présenter par exemple sous la forme d'un tissu.

Toutefois, étant donné que les fils de verre nu n'ont quasiment aucune adhérence avec le liant, il est nécessaire de revêtir la structure de fils de verre d'une composition résinique qui assure la liaison entre le verre et le liant.

De manière connue, on obtient la structure de renforcement en faisant passer les fils de verre dans un bain d'une composition résinique constituée d'une solution alcoolique renfermant de l'ordre de 70 % en poids d'une résine, puis entre deux rouleaux de manière à éliminer l'excédent de résine, et enfin dans une enceinte chauffée à une température de l'ordre de 100 à 145°C pendant quelques minutes au maximum afin de réduire la quantité de solvant par rapport à la résine jusqu'à une valeur d'environ 5 % à 12 %. La structure de renforcement ainsi obtenue est collectée sous la forme d'un enroulement, par exemple une bobine, ou découpée soit en feuilles soit directement à la forme et aux dimensions désirées de la meule finale, par exemple au moyen d'un emporte-pièce.

Dans une étape ultérieure, la meule abrasive est obtenue selon le procédé qui consiste à déposer dans un moule, en alternance, plusieurs couches du mélange des particules abrasives et de liant d'une part, et de la structure de renforcement d'autre part, et à mouler l'ensemble par compression, à froid ou à chaud. Après démoulage, l'article obtenu est traité thermiquement dans des conditions de température permettant de réticuler le liant et finalement obtenir la meule abrasive.

Les compositions résiniques les plus couramment utilisées pour la fabrication des structures de renforcement précitées comprennent au moins une résine thermodurcissable choisie parmi :
- les résines urée-aldéhyde, par exemple une résine urée-formaldéhyde (GB-A-419 812),
- les résines phénoliques, par exemple une ou plusieurs novolaques (GB-A-1 151 174 et WO-A- 2009/004250), ou un résol en solution associé à une novolaque solide (US-A-4 338 357), et
- les mélanges de résines urée-aldéhyde et de résines phénoliques, par exemple un prépolymère urée-formaldéhyde et une résine phénolique au stade A (US-A-4 038 046) ou une résine urée-formaldéhyde et un résol en présence d'un catalyseur acide (US-A-5 551 961).

Les compositions résiniques précitées permettent d'obtenir des structures de renforcement qui présentent de bonnes propriétés, notamment en termes de flexibilité et de pouvoir collant.

Il est en effet important que la structure puisse avoir une flexibilité suffisamment élevée, c'est-à-dire que la résine ne soit pas trop « dure », afin que l'opération de découpe décrite précédemment puisse se faire dans des conditions acceptables, en générant le moins de poussières possible et en faisant en sorte que la résine ne soit pas enlevée au voisinage des bords découpés de la structure (le verre ne doit pas être à nu).

Mais il faut encore que la structure ait un pouvoir collant (aussi appelé « pégosité » ou « tack » en anglais) pas trop important afin que les outils de découpe ne soient pas souillés par la résine et que, pendant le stockage, les structures ne collent pas entre elles et les poussières n'adhèrent pas auxdites structures. On évite ainsi d'avoir à placer un matériau anti-adhésif sur la structure avant qu'elle soit enroulée ou entre les structures découpées.

La structure doit en outre présenter des propriétés mécaniques acceptables, notamment une résistance à la traction suffisamment élevée pour que l'article abrasif final, en particulier la meule, n'éclate pas dans les conditions normales d'utilisation.

Enfin, sur un plan réglementaire, il faut veiller à ce que les compositions résiniques soient non polluantes, c'est-à-dire qu'elles contiennent - mais aussi qu'elles génèrent lors de l'application sur la structure de renforcement ou ultérieurement, notamment durant l'utilisation de la meule finale - le moins possible de composés pouvant nuire à la santé humaine ou à l'environnement.

Le but de la présente invention est de proposer une structure de fils de verre pouvant être utilisée pour renforcer des articles abrasifs agglomérés, en particulier des meules, qui présente un bon compromis entre les différentes propriétés précitées.

La structure de renforcement conforme à l'invention est revêtue d'une composition résinique qui comprend les constituants suivants dans les proportions indiquées, exprimées en pourcentage en poids des matières solides :
- 75 à 98 % d'un mélange d'au moins une novolaque présentant une température de transition vitreuse inférieure ou égale à 60°C et d'au moins une novolaque présentant une température de transition vitreuse supérieure à 60°C,
- 0,5 à 10 % d'au moins une cire,
- 1 à 15 % d'au moins un agent réticulant choisi parmi les imines et les mélamines modifiées de formule 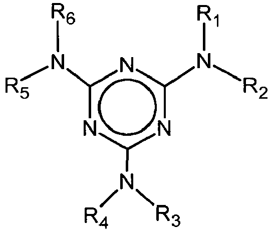 dans laquelle R₁, R₂, R₃, R₄, R₅ et R₆, identiques ou différents, représentent un atome d'hydrogène ou un radical -CH₂OH, -CH₂OCH₃ ou -CH₂OCH₂OCH₃, au moins un des radicaux R₁ à R₆ étant différent de H,
- 0 à 10 % d'au moins un agent plastifiant.

La novolaque présentant la température de transition la plus basse donne de la souplesse à la structure et permet d'avoir un niveau de flexibilité élevé. Elle permet de compenser la trop grande rigidité de la novolaque à plus haute température de transition vitreuse et ainsi d'ajuster la flexibilité au niveau désiré.

Comme déjà mentionné, il est important d'avoir une flexibilité élevée pour que la découpe de la structure puisse être effectuée correctement, notamment sans que la composition de résine puisse « s'écailler » au niveau des bords en laissant le verre à nu.

De préférence, la novolaque ayant la température de transition vitreuse la plus basse, c'est-à-dire inférieure ou égale à 60°C, représente 10 à 50 % en poids du mélange des novolaques.

De manière avantageuse, la température de transition vitreuse de la novolaque de plus basse température de transition vitreuse est supérieure à 20°C. De la même manière, la température de transition vitreuse de la novolaque ayant la température de transition la plus élevée est supérieure ou égale à 80°C, et avantageusement inférieure ou égale à 100°C.

Les novolaques conformes à l'invention peuvent être choisies parmi les novolaques connues de l'homme du métier obtenues par réaction d'un composé phénolique, de préférence le phénol, et d'un aldéhyde, de préférence le formaldéhyde, en présence d'un catalyseur acide (pH de l'ordre de 4 à 7). De préférence, le rapport molaire formaldéhyde/phénol varie de 0,75 à 0,85. Le choix de la novolaque est opéré en fonction de la température de transition vitreuse désirée.

Les novolaques utilisables dans le cadre de l'invention renferment moins de 0,1 % en poids de formaldéhyde libre, et de préférence moins de 0,05 %.

La cire joue le rôle d'agent anti-adhésion (« anti-blocking ») et permet de compenser le fort pouvoir collant de la novolaque qui a la température de transition vitreuse la plus basse. Comme déjà dit, un pouvoir collant pas trop élevé permet, d'une part, de conserver les structures de renforcement découpées dans un état de propreté très intéressant qui évite la contamination par des poussières, et d'autre part de pouvoir manipuler ces structures découpées avec un risque minimal qu'elles adhèrent les unes aux autres sous une pression modérée, notamment pendant le stockage.

La cire est choisie parmi les cires de paraffines, par exemple les cires de polyéthylène ou de polypropylène, et les cires d'éthylènebisamide, notamment le N,N'-éthylènebis(stéramide). De manière avantageuse, la cire est microcristalline.

De préférence la teneur en cire n'excède pas 3 % en poids des matières solides de la composition résinique, et avantageusement est inférieure ou égale à 2 %.

L'agent de réticulation améliore les propriétés mécaniques des fils constituant la structure, en particulier en augmentant leur résistance à la traction. Comme indiqué précédemment, l'agent de réticulation est choisi parmi les imines, en particulier l'hexaméthylènetétramine et les mélamines modifiées répondant à la formule précitée, dans laquelle de préférence au moins un des radicaux R₁ à R₆, est égal à -CH₂OCH₃ et avantageusement 4 à 6 de ces radicaux sont égaux à -CH₂OCH₃. De manière particulièrement préférée, la mélamine modifiée est l'hexaméthoxyméthylmélamine. On préfère les mélamines modifiées parce qu'elles ont la capacité de réagir avec les novolaques sans libération de formaldéhyde.

La quantité d'agent de réticulation représente de préférence 3 à 9 % en poids des matières solides de la composition résinique, et avantageusement 7 à 8 %.

L'agent plastifiant contribue à améliorer la souplesse de la composition résinique. A titre d'exemples de tels agents, on peut citer les alkylphosphates, les phtalates, la triéthanolamine, les huiles et les alcools polyhydriques, notamment le glycérol et les glycols.

De préférence, la teneur en agent plastifiant n'excède pas 3 % en poids des matières solides de la composition résinique.

Parce que la composition résinique revêtant la structure de renforcement selon l'invention est relativement stable dans le temps, il est possible de conserver la structure de renforcement pendant un période de temps importante, notamment jusqu'à 90 jours sans perte notable des propriétés.

La structure de renforcement peut être composée de fils de verre continus, de préférence se présentant sous la forme d'un non-tissé tel qu'un voile ou un mat, d'une grille ou d'un tissu, ou encore d'un mat de fils coupés.

Les fils de verre sont des fils dits « de renforcement » produits industriellement à partir de filets de verre fondu s'écoulant des multiples orifices d'une filière, ces filets étant étirés mécaniquement sous la forme de filaments continus qui sont rassemblés en fils de base, puis collectés par bobinage sur un support en rotation.

Les fils de verre conformes à l'invention sont ainsi des fils de base, et des produits dérivés de ces fils, notamment les assemblages de ces fils de base en stratifils. De tels assemblages sont obtenus en dévidant simultanément plusieurs enroulements de fils de base puis en les rassemblant en mèches qui sont bobinées sur un support en rotation. Les fils de verre peuvent subir une opération de torsion pour produire des fils textiles pour la réalisation de tissus.

Les fils sont constitués de filaments de verre dont le diamètre peut varier dans une large mesure, par exemple de 9 à 24 µm, de préférence 9 à 17 µm. De manière avantageuse, les fils de verre présentent un titre (ou masse linéique) compris entre 34 et 4800 tex, de préférence entre 34 et 1200 tex.

Les fils peuvent être constitués de tout type de verre, notamment E, C et AR (alcali-résistant). De préférence, il s'agit de verre E.

Selon un mode de réalisation préféré, la structure est un tissu composé de fils de verre présentant un grammage qui varie de 100 à 1000 g/m².

La composition résinique en tant que telle, avant son application sur la structure de renforcement, constitue également un objet de l'invention. Ainsi la composition résinique comprend les composés suivants, exprimés en pourcentage en poids
- 25 à 55 % d'au moins une novolaque ayant une température de transition vitreuse supérieure ou égale à 60°C
- 10 à 30 % d'au moins une novolaque ayant une température de transition vitreuse inférieure à 60°C
- 0,5 à 6,5 % d'au moins une cire
- 0,5 à 9 % d'au moins un agent de réticulation choisi parmi les imines, en particulier l'hexaméthylènetétramine et les mélamines modifiées répondant à la formule précitée, en particulier l'hexaméthoxyméthylmélamine,
- 0 à 3 % d'au moins un agent plastifiant
- 25 à 45 % d'au moins un alcool
- 0 à 15 % d'eau

A titre d'alcool conforme à l'invention, on peut citer le méthanol, l'éthanol, l'isopropanol et les mélanges de ces alcools.

La préparation de la composition résinique peut se faire par simple mélange des constituants dans un récipient approprié, avantageusement pourvu de moyens d'agitation : de préférence, les novolaques sont sous la forme d'une solution dans l'éthanol ou un mélange d'éthanol et de méthanol, la cire est une dispersion dans l'eau, l'agent de réticulation est en solution dans l'eau et l'agent plastifiant est liquide.

Le cas échéant, la composition résinique peut comprendre des additifs tels que des émulsifiants, des pigments, des charges, des agents anti-migration, des coalescents, des agents mouillants, des biocides, des organosilanes, des agents anti-mousse, des colorants, des agents anti-oxydants. La teneur en additifs n'excède pas 3 % des matières solides de la composition résinique.

La fabrication de la structure de renforcement revêtue est effectuée en continu en la faisant passer d'abord dans un bain d'imprégnation constitué de la composition résinique liquide, puis dans l'entrefer d'un dispositif de calandrage composé de deux rouleaux, ce qui permet d'ajuster la teneur en composition résinique à une valeur proche de 30 % en poids de matières solides, et enfin dans une enceinte chauffée afin d'éliminer une partie du solvant. De préférence, l'enceinte comprend une première zone chauffée à une température de l'ordre de 130°C et au moins une deuxième zone chauffée à une température de l'ordre de 110°C, le temps de séjour de la structure de renforcement dans l'ensemble des deux zones étant généralement inférieur à une dizaine de minutes, de préférence variant de 30 secondes à 3 minutes. De préférence, le pourcentage de solvant dans la structure de renforcement est inférieur à 13 %, et avantageusement inférieur à 10 %. La structure de renforcement obtenue est ensuite collectée sous la forme d'une bobine ou découpée soit en feuilles soit directement à la forme et aux dimensions de la meule abrasive finale, ces structures découpées étant ensuite stockées sous la forme d'empilements.

La structure de renforcement conforme à l'invention peut être utilisée notamment pour réaliser des articles sous la forme d'abrasifs agglomérés tels que des meules abrasives, ces articles constituant aussi un objet de l'invention.

Ces articles abrasifs peuvent être fabriqués notamment selon les techniques de moulage en compression connues de l'homme du métier. Par exemple, les meules abrasives peuvent être obtenues en déposant à l'intérieur d'un moule plusieurs couches alternées d'un mélange granulaire de particules abrasives et de liant, et de la structure de renforcement préalablement découpée aux dimensions du moule. Le nombre de structures de renforcement varie en fonction du niveau de performances souhaité pour la meule abrasive ; en général, ce nombre reste n'excède pas 10.

Le moule est mis sous une pression suffisante pour former une pièce « crue » (« green » en anglais) qui présente une cohésion telle qu'elle peut être manipulée et traitée dans les étapes suivantes sans modification substantielle de forme et de dimensions. Le moule peut être chauffé pendant la compression (moulage à chaud) à une température qui est généralement inférieure à 170°C, voire 150°C. Le liant à ce stade est à l'état non réticulé.

La pièce crue est retirée du moule et chauffée dans un four à une température permettant de réticuler le liant et de donner un réseau polymérique durci qui confère à la pièce sa forme finale. La réticulation est effectuée selon un cycle de cuisson conventionnel qui consiste à porter la pièce crue à une température de l'ordre de 100°C et à la maintenir à cette température pendant une durée variant de 30 minutes à plusieurs heures afin que les produits volatils formés puissent être évacués. Ensuite, la pièce est chauffée à une température de l'ordre de 200 à 250°C pendant 10 à 35 heures.

La meule abrasive ainsi obtenue peut être utilisée dans tous types d'applications qui requièrent des propriétés d'abrasion, par exemple dans des opérations de ponçage, d'ébavurage, de rectification, et plus particulièrement de découpe de matériaux durs, tels que l'acier.

Les exemples donnés ci-après permettent d'illustrer l'invention sans toutefois la limiter.

Dans ces exemples, on évalue les propriétés de la structure de renforcement dans les conditions suivantes :
→ flexibilité : un échantillon de structure de renforcement (4 mm x 12 mm) est placé dans un rigidimètre qui mesure la résistance à la flexion (en mN) à différents angles de flexion. La résistance à la flexion est acceptable quand sa valeur est au plus égale à 250 mN.
→ pouvoir collant : on superpose quatre structures de renforcement sous forme de disque de 10 à 12 cm de diamètre et on applique une pression de 500 N pendant 1 minute. On mesure le pouvoir collant en évaluant l'aptitude des structures à pouvoir être séparées manuellement les unes des autres par un opérateur selon une échelle de valeurs allant de 1 à 5 : 1 = pas de collage; 3 = collage moyen; séparation facile; 5 = fort collage, séparation impossible.
→ la résistance à la traction du fil de chaîne ou de trame est mesurée dans les conditions de la norme ISO 3341 applicable pour des fils de verre jusqu'à 2000 tex. La valeur de la résistance en traction est exprimée en N/5cm.
→ taux de poussières : un échantillon de structure de renforcement (8 cm x 8 cm) est pesé puis plié manuellement 3 fois de manière à avoir une longueur totale de pliure de 45±1 cm. L'échantillon est déplié et pesé. Le pourcentage de perte de masse de l'échantillon correspond au taux de poussières. Le taux de poussières est un paramètre qui permet d'évaluer l'aptitude à la découpe ; il est considéré comme étant acceptable quand sa valeur est inférieure à 2 %.
→ la perte au feu, en %, est mesurée dans les conditions de la norme ISO 1887.

### EXEMPLES 1 A 7

On prépare des compositions résiniques comprenant les constituants figurant dans le Tableau 1.

Chaque composition résinique sert à imprégner un tissu composé de fils de verre ((armure leno ; fil de chaîne EC 204 tex s/z ; fil de trame RO 408 tex ; Nr COUNTS (10 cm) : trame 23 ± 5 %, chaîne 24 ± 5 % (x2)) qui est ensuite séché à 140°C pendant 1 minute dans une étuve.

Les propriétés du tissu de verre figurent dans le Tableau 1.

### EXEMPLE 8

Cet exemple illustre l'application de la composition résinique dans une installation industrielle.

Sur une ligne industrielle d'enduction fonctionnant en continu, on dispose un tissu de fils de verre décrit dans les exemples 1 à 7 de 0,5 m de large déroulé à partir d'une bobine. Sur le trajet, le tissu passe dans un bain d'imprégnation contenant la composition résinique de l'exemple 1, puis il est traité dans un four comprenant une première section chauffée à 135°C et une deuxième section chauffée à 115°C avant d'être collecté sous la forme d'une bobine.

Le tissu de fils de verre obtenu présente les propriétés suivantes :
Taux de poussières : 0,8 %
Résistance à la traction : en chaîne : 3100 N/5 cm ; en trame : 3500 N/5 cm
Pouvoir collant à 30 jour(s) : 1,5
Perte au feu : 30 %

**Tableau 1**

| Exemple | | 1 | 2 | 3 | 4 | 5 | 6 (comparatif) | 7 (comparatif) |
|---|---|---|---|---|---|---|---|---|
| Novolaque phénol-formaldéhyde⁽¹⁾ (Tg environ 80°C) | | 41,40 (64,4) | 42,55 (65,5) | 41,40 (62,2) | 41,40 (60,3) | 41,40 (60,3) | 44,60 (67,4) | 52,00 (78,8) |
| Novolaque phénol-formaldéhyde⁽²⁾ (Tg environ 40°C) | | 19,10 (29,7) | 19,65 (30,2) | 19,10 (28,7) | 19,10 (27,8) | 19,10 (27,9) | 20,60 (31,1) | 14,00 (21,2) |
| Cire de polyéthylène⁽³⁾ | | 0,90 (1,4) | 0,90(1,4) | 0,90 (1,3) | 0,90 (1,3) | 0,90 (1,3) | 1,00 (1,5) | - |
| Hexaméthylènetétramine⁽⁴⁾ | | 2,90 (4,5) | 1,90 (2,9) | | - | - | - | - |
| Hexaméthoxyméthylmélamine ⁽⁵⁾ | | - | - | 5,25 (7,8) | - | - | - | - |
| hhexaméthoxyméthylmélamine ⁽⁶⁾ | | - | - | - | 7,25 (10,6) | - | - | - |
| Hexaméthoxyméthylmélamine ⁽⁷⁾ | | - | - | - | - | 7,20 (10,5) | - | - |
| Eau | | 5,25 | 3,70 | 2,90 | 0,90 | 0,90 | 1,00 | - |
| Alcool | | 30,45 | 31,30 | 30,45 | 30,45 | 30,45 | 32,80 | 34,00 |
| Flexibilité (mN) | | 160 | 130 | 155 | 160 | 170 | 110 | n. d. |
| Pouvoir collant | | | | | | | | |
| | T = 0 | 2,5 | 2,0 | 2,0 | 2,0 | 2,5 | 2,5 | 4,0 |
| | T = 15 jours | 2,0 | 2,2 | 1,5 | 1,5 | 2,5 | 2,0 | 3,5 |
| | T = 30 jours | 1,5 | 1,5 | 1,5 | 1,5 | 2,5 | 1,5 | 3,5 |
| Résistance à la traction (N/5 cm) | | 3400 | 3000 | 3400 | 3200 | 2800 | 2200 | 2300 |

| | | | | | | | | |
|---|---|---|---|---|---|---|---|---|
| Entre parenthèses : % en poids des matières solides n. d. : non déterminé (1) commercialisé sous la référence « Prefere^{®} 3E 5057E X-C 69 » par la société DYNEA ; solution à 65 % en poids de matières solides dans l'éthanol (2) commercialisé sous la référence « PF7505 IL^{®} » par la société HEXION ; solution à 70 % en poids de matières solides dans l'éthanol (3) commercialisé sous la référence « Hydrocer 69 » par la société SHAMROCK ; solution à 50 % en poids de matières solides dans l'éthanol (4) commercialisé sous la référence « Hexamine » par la société HEXION ; solution à 40 % en poids de matières solides dans l'eau (5) commercialisé sous la référence « Cyrez^{®} 963L » par la société CYTEC ; 100 % d'hexaméthoxyméthylmélamine ; solution à 72 % de matières solides dans l'eau (6) commercialisé sous la référence « Cohedur^{®} A » par la société CYTEC ; 50 % d'hexaméthoxyméthylmélamine et 50 % de charges minérales ; teneur en matières solides : 100 % (7) commercialisé sous la référence « Resamin^{®} HF480 » par la société CYTEC ; 100 % d'hexaméthoxyméthylmélamine ; teneur en matières solides : 100 % | | | | | | | | |

## Revendications

1. Structure de fils de verre revêtue d'une composition résinique, notamment pour le renforcement d'articles abrasifs agglomérés, **caractérisée en ce que** la composition résinique comprend les constituants suivants dans les proportions indiquées, exprimées en pourcentage en poids des matières solides :
- 75 à 98 % d'un mélange d'au moins une novolaque présentant une température de transition vitreuse inférieure ou égale à 60°C et d'au moins une novolaque présentant une température de transition vitreuse supérieure à 60°C,
- 0,5 à 10 % d'au moins une cire,
- 1 à 15 % d'au moins un agent réticulant choisi parmi les imines et les mélamines modifiées de formule 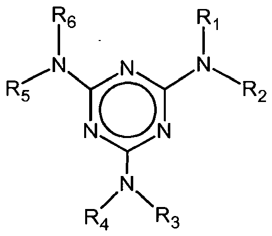 dans laquelle R₁, R₂, R₃, R₄, R₅ et R₆, identiques ou différents, représentent un atome d'hydrogène ou un radical -CH₂OH, -CH₂OCH₃ ou -CH₂OCH₂OCH₃, au moins un des radicaux R₁ à R₆ étant différent de H,
- 0 à 10 % d'au moins un agent plastifiant.

2. Structure selon la revendication 1, **caractérisée en ce que** la novolaque ayant la température de transition vitreuse la plus basse représente 10 à 50 % en poids du mélange des novolaques.

3. Structure selon la revendication 1 ou 2, **caractérisée en ce que** la novolaque ayant la température de transition la plus basse présente une température de transition vitreuse inférieure à 20°C.

4. Structure selon l'une des revendications 1 à 3, **caractérisée en ce que** la novolaque ayant la température de transition la plus haute présente une température de transition vitreuse supérieure ou égale à 80°C, de préférence inférieure ou égale à 100°C.

5. Structure selon l'une des revendications 1 à 4, **caractérisée en ce que** les novolaques sont obtenues par réaction de phénol et de formaldéhyde dans un rapport molaire formaldéhyde/phénol qui varie de 0,75 à 0,85.

6. Structure selon l'une des revendications 1 à 5, **caractérisée en ce que** la cire est choisie parmi les cires de paraffines, de préférence une cire de polyéthylène ou de polypropylène, et les cires d'éthylènebisamide, de préférence le N,N'-éthylènebis(stéramide).

7. Structure selon l'une des revendications 1 à 6, **caractérisée en ce que** la teneur en cire n'excède pas 3 %, de préférence est inférieure ou égale à 2 % en poids des matières solides de la composition résinique.

8. Structure selon l'une des revendications 1 à 7, **caractérisée en ce que** l'agent de réticulation répond à la formule précitée dans laquelle au moins un des radicaux R₁ à R₆, est égal à -CH₂OCH₃, et de préférence 4 à 6 de ces radicaux sont égaux à -CH₂OCH₃.

9. Structure selon l'une des revendications 1 à 8, **caractérisée en ce que** l'agent de réticulation est l'hexaméthylènetétramine et l'hexaméthoxy-méthylmélamine.

10. Structure selon l'une des revendications 1 à 9, **caractérisée en ce que** la teneur en agent de réticulation représente 3 à 9 % en poids des matières solides de la composition résinique, et de préférence 7 à 8 %.

11. Structure selon l'une des revendications 1 à 10, **caractérisée en ce que** l'agent plastifiant est choisi parmi les alkylphosphates, les phtalates, la triéthanolamine, les huiles et les alcools polyhydriques.

12. Structure selon l'une des revendications 1 à 11, **caractérisée en ce que** la teneur en agent plastifiant n'excède pas 3 % en poids des matières solides de la composition résinique.

13. Structure selon l'une des revendications 1 à 12, **caractérisée en ce qu'**elle est composée de fils de verre continus, de préférence se présentant sous la forme d'un non-tissé, tel qu'un voile ou un mat, d'une grille ou d'un tissu, ou d'un mat de fils coupés.

14. Structure selon la revendication 13, **caractérisée en ce que** les fils présentent un diamètre variant de 9 à 24 µm, de préférence 9 à 17 µm.

15. Structure selon la revendication 13 ou 14, **caractérisée en ce que** les fils présentent un titre (ou masse linéique) compris entre 34 et 4800 tex, de préférence entre 34 et 1200 tex.

16. Structure selon l'une des revendications 1 à 15, **caractérisée en ce qu'**elle se présente sous la forme d'un tissu présentant un grammage variant de 100 à 1000 g/m².

17. Composition résinique apte à revêtir la structure selon l'une des revendications 1 à 16, **caractérisée en ce qu'**elle comprend les composés suivants, exprimés en pourcentage en poids
- 25 à 55 % d'au moins une novolaque ayant une température de transition vitreuse supérieure ou égale à 60°C
- 10 à 30 % d'au moins une novolaque ayant une température de transition vitreuse inférieure à 60°C
- 0,5 à 6,5 % d'au moins une cire
- 0,5 à 9 % d'au moins un agent de réticulation choisi parmi les imines et les mélamines modifiées de formule 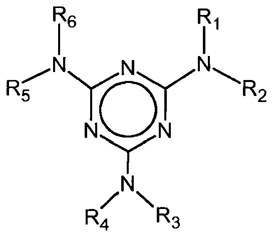 dans laquelle R₁, R₂, R₃, R₄, R₅ et R₆, identiques ou différents, représentent un atome d'hydrogène ou un radical -CH₂OH, -CH₂OCH₃ ou -CH₂OCH₂OCH₃, au moins un des radicaux R₁ à R₆ étant différent de H,
- 0 à 3 % d'au moins un agent plastifiant
- 25 à 45 % d'au moins un alcool
- 0 à 15 % d'eau

18. Composition résinique selon la revendication 17, **caractérisée en ce que** l'alcool est choisi parmi le méthanol, l'éthanol, l'isopropanol et les mélanges de ces alcools.

19. Article abrasif aggloméré à base de particules abrasives liées par un liant, **caractérisé en ce qu'**il renferme une structure de renforcement selon l'une des revendications 1 à 16.

20. Article selon la revendication 19, **caractérisé en ce qu'**il s'agit d'une meule abrasive.

## Patentansprüche

1. Glasfaserstrangstruktur, die mit einer Harzzusammensetzung überzogen ist, insbesondere zur Verstärkung von gebondeten Schleifartikeln, **dadurch gekennzeichnet, dass** die Harzzusammensetzung die folgenden Bestandteile in den angegebenen, in Gewichtsprozent der Feststoffe ausgedrückten Verhältnissen umfasst:
- 75 bis 98 % eines Gemisches aus mindestens einem Novolak, der eine Glasübergangstemperatur von weniger als oder gleich 60 °C aufweist, und mindestens einem Novolak, der eine Glasübergangstemperatur von mehr als60 °C aufweist,
- 0,5 bis 10 % mindestens eines Wachses,
- 1 bis 15 % mindestens eines Vernetzungsmittels ausgewählt aus den Iminen und den modifizierten Melaninen mit der Formel 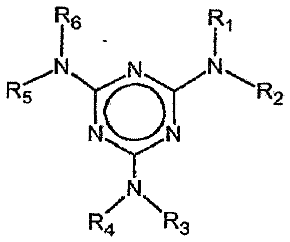 in der R₁, R₂, R₃, R₄, R₅ und R₆, die gleich oder verschieden sein können, ein Wasserstoffatom oder ein Radikal -CH₂OH, -CH₂OCH₃ oder -CH₂OCH₂OCH₃ darstellen, wobei mindestens eines der Radikale R₁ bis R₆ kein H ist,
- 0 bis 10 % mindestens eines Weichmachers.

2. Struktur nach Anspruch 1, **dadurch gekennzeichnet, dass** der die niedrigste Glasübergangstemperatur aufweisende Novolak 10 bis 50 Gew.-% des Novolak-Gemischs ausmacht.

3. Struktur nach Anspruch 1 oder 2, **dadurch gekennzeichnet, dass** der die niedrigste Übergangstemperatur aufweisende Novolak eine Glasübergangstemperatur von weniger als 20 °C aufweist.

4. Struktur nach einem der Ansprüche 1 bis 3, **dadurch gekennzeichnet, dass** der die höchste Übergangstemperatur aufweisende Novolak eine Glasübergangstemperatur von mehr als oder gleich 80 °C aufweist, vorzugsweiseweniger als oder gleich 100 °C.

5. Struktur nach einem der Ansprüche 1 bis 4, **dadurch gekennzeichnet, dass** die Novolake durch Reaktion von Phenol und Formaldehyl in einem Molverhältnis von Formaldehyd zu Phenol, das von 0,75 bis 0,85 variiert, gewonnen werden.

6. Struktur nach einem der Ansprüche 1 bis 5, **dadurch gekennzeichnet, dass** das Wachs aus den Paraffinwachsen, vorzugsweise einem Polyethylen- oder Polypropylenwachs, und den Ethylen-bis-amidwachsen, vorzugsweise N,N'-Ethylen-bis(stearamid) ausgewählt ist.

7. Struktur nach einem der Ansprüche 1 bis 6, **dadurch gekennzeichnet, dass** der Wachsanteil 3 Gew.-% der Feststoffe der Harzzusammensetzung nicht übersteigt, vorzugsweise kleiner oder gleich 2 Gew.-% ist.

8. Struktur nach einem der Ansprüche 1 bis 7, **dadurch gekennzeichnet, dass** das Vernetzungsmittel der oben genannten Formel entspricht, in der mindestens eines der Radikale R₁ bis R₆ gleich -CH₂OCH₃ ist, und vorzugsweise 4 bis 6 dieser Radikale gleich -CH₂OCH₃ sind.

9. Struktur nach einem der Ansprüche 1 bis 8, **dadurch gekennzeichnet, dass** das Vernetzungsmittel Hexamethylentetramin und Hexamethoxymethylmelamin ist.

10. Struktur nach einem der Ansprüche 1 bis 9, **dadurch gekennzeichnet, dass** der Anteil des Vernetzungsmittels 3 bis 9 Gew.-% der Feststoffe der Harzzusammensetzung beträgt, und vorzugsweise 7 bis 8 %.

11. Struktur nach einem der Ansprüche 1 bis 10, **dadurch gekennzeichnet, dass** der Weichmacher aus den Alkylphosphaten, den Phthalaten, dem Triethanolamin, den Ölen und den polyhydrischenAlkoholen ausgewählt ist.

12. Struktur nach einem der Ansprüche 1 bis 11, **dadurch gekennzeichnet, dass** der Anteil des Weichmachers 3 Gew.-% der Feststoffe der Harzzusammensetzung nicht übersteigt.

13. Struktur nach einem der Ansprüche 1 bis 12, **dadurch gekennzeichnet, dass** sie aus Endlosglasfasern, die vorzugsweise in Form eines Vliesstoffs, beispielsweise eines Flors oder einer Matte, eines Gitters oder eines Gewebes vorliegen, oder einer Matte aus geschnittenen Fasern gebildet ist.

14. Struktur nach Anspruch 13, **dadurch gekennzeichnet, dass** die Fasern einen Durchmesser aufweisen, der von 9 bis 24 µm, vorzugsweise von 9 bis 17 µm variiert.

15. Struktur nach Anspruch 13 oder 14, **dadurch gekennzeichnet**, dassdie Fasern einen Titer (oder Feinheit) im Bereich zwischen 34 und 4800 tex, vorzugsweise zwischen 34 und 1200 texaufweisen.

16. Struktur nach einem der Ansprüche 1 bis 15, **dadurch gekennzeichnet, dass** sie in Form eines Gewebes vorliegt, das eine flächenbezogene Masse aufweist, die von 100 bis 1000 g/m² variiert.

17. Harzzusammensetzung, die geeignet ist, die Struktur nach einem der Ansprüche 1 bis 16 zu überziehen, **dadurch gekennzeichnet, dass** sie die folgenden, in Gewichtsprozent ausgedrückten Bestandteile umfasst:
- 25 bis 55 % mindestens eines Novolaks, der eine Glasübergangstemperatur von mehr als oder gleich 60 °C aufweist
- 10 bis 30 % mindestens eines Novolaks, der eine Glasübergangstemperatur von weniger als 60 °C aufweist
- 0,5 bis 6,5 % mindestens eines Wachses
- 0,5 bis 9 % mindestens eines Vernetzungsmittels, ausgewählt aus den Iminen und den modifizierten Melaminen mit der Formel, 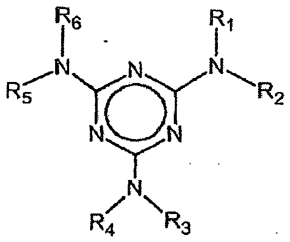 in der R₁, R₂, R₃, R₄, R₅ und R₆, die gleich oder verschieden sein können, ein Wasserstoffatom oder ein Radikal -CH₂OH, -CH₂OCH₃ oder -CH₂OCH₂OCH₃ darstellen, wobei mindestens eines der Radikale R₁ bis R₆ kein H ist,
- 0 bis 3 % mindestens eines Weichmachers
- 25 bis 45 % mindestens eines Alkohols
- 0 bis 15 % Wasser

18. Harzzusammensetzung nach Anspruch 17, **dadurch gekennzeichnet, dass** der Alkohol aus Methanol, Ethanol, Isopropanol und den Gemischen dieser Alkohole ausgewählt ist.

19. Gebondeter Schleifartikel auf der Basis von durch ein Bindemittel gebundenen Schleifpartikeln, **dadurch gekennzeichnet**, dasser eine Verstärkungsstruktur nach einem der Ansprüche 1 bis 16 einschließt.

20. Artikel nach Anspruch 19, **dadurch gekennzeichnet, dass** es sich um eine Schleifscheibe handelt.

## Claims

1. A glass strand structure coated with a resin composition, notably for the reinforcement of bonded abrasive articles, **characterized in that** the resin composition comprises the following constituents in the proportions indicated, expressed in percentage by weight of solid matter:
- 75 to 98 % of a mixture of at least one novolac having a glass transition temperature lower than or equal to 60°C and at least one novolac having a glass transition temperature above 60°C,
- 0.5 to 10% of at least one wax,
- 1 to 15% of at least one crosslinking agent chosen from imines and modified melamines of formula: 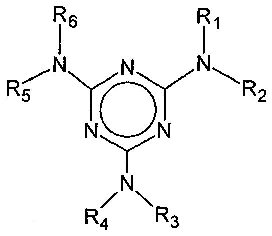 in which R₁, R₂, R₃, R₄, R₅ and R₆, which are identical or different, represent a hydrogen atom or a -CH₂OH, -CH₂OCH₃ or -CH₂OCH₂OCH₃ radical, at least one of the radicals R₁ to R₆ being other than H,
- 0 to 10% of at least one plasticizing agent.

2. The structure as claimed in claim 1, **characterized in that** the novolac having the lower glass transition temperature represents 10 to 50% by weight of the mixture of novolacs.

3. The structure as claimed in claim 1 or 2, **characterized in that** the novolac having the lower glass transition temperature has a glass transition temperature lower than 20°C.

4. The structure as claimed in one of claims 1 to 3, **characterized in that** the novolac having the higher glass transition temperature has a glass transition temperature above or equal to 80°C, preferably lower than or equal to 100°C.

5. The structure as claimed in one of claims 1 to 4, **characterized in that** the novolacs are obtained by reacting phenol and formaldehyde in a formaldehyde/phenol molar ratio that varies from 0.75 to 0.85.

6. The structure as claimed in one of claims 1 to 5, **characterized in that** the wax is chosen from paraffin waxes, preferably a polyethylene or polypropylene wax, and ethylenebisamide waxes, preferably N,N'-ethylenebis(steramide).

7. The structure as claimed in one of claims 1 to 6, **characterized in that** the wax content does not exceed 3%, and preferably is less than or equal to 2% by weight of solid matter of the resin composition.

8. The structure as claimed in one of claims 1 to 7, **characterized in that** the crosslinking agent corresponds to the aforementioned formula in which at least one of the radicals R₁ to R₆ is equal to -CH₂OCH₃ and preferably 4 to 6 of these radicals are equal to -CH₂OCH₃.

9. The structure as claimed in one of claims 1 to 8, **characterized in that** the crosslinking agent is hexamethylenetetramine and hexamethoxymethylmelamine.

10. The structure as claimed in one of claims 1 to 9, **characterized in that** the content of crosslinking agent represents 3 to 9%, and preferably 7 to 8%, by weight of solid matter of the resin composition.

11. The structure as claimed in one of claims 1 to 10, **characterized in that** the plasticizing agent is chosen from alkylphosphates, phthalates, triethanolamine, oils and polyhydric alcohols.

12. The structure as claimed in one of claims 1 to 11, **characterized in that** the plasticizing agent content does not exceed 3% by weight of solid matter of the resin composition.

13. The structure as claimed in one of claims 1 to 12, **characterized in that** it is composed of continuous glass strands, preferably in the form of a nonwoven such as a web or a mat, a mesh or fabric, or of a mat of cut strands.

14. The structure as claimed in claim 13, **characterized in that** the strands have a diameter varying from 9 to 24 µm, preferably 9 to 17 µm.

15. The structure as claimed in claim 13 or 14, **characterized in that** the strands have a count (or linear mass) of between 34 and 4800 tex, preferably between 34 and 1200 tex.

16. The structure as claimed in one of claims 1 to 15, **characterized in that** it is in the form of a fabric having a grammage varying from 100 to 1000 g/m².

17. A resin composition capable of coating the structure as claimed in one of claims 1 to 16, **characterized in that** it comprises the following compounds, expressed in percentage by weight
- 25 to 55% of at least one novolac having a glass transition temperature above or equal to 60°C,
- 10 to 30% of at least one novolac having a glass transition temperature lower than 60°C,
- 0.5 to 6.5% of at least one wax,
- 0.5 to 9% of at least one crosslinking agent chosen from imines and modified melamines of formula: 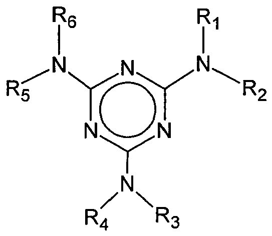 in which R₁, R₂, R₃, R₄, R₅ and R₆, which are identical or different, represent a hydrogen atom or a -CH₂OH, -CH₂OCH₃ or
- CH₂OCH₂OCH₃ radical, at least one of the radicals R₁ to R₆ being other than H,
- 0 to 3% of at least one plasticizing agent,
- 25 to 45% of at least one alcohol,
- 0 to 15% of water.

18. The resin composition as claimed in claim 17, **characterized in that** the alcohol is chosen from methanol, ethanol, isopropanol and mixtures of these alcohols.

19. A bonded abrasive article based on abrasive particles bonded with a binder, **characterized in that** it contains a reinforcing structure as claimed in one of claims 1 to 16.

20. The article as claimed in claim 19, **characterized in that** it consists of an abrasive grinding wheel.
